# FASCICULE DE BREVET EUROPEEN

(11) **EP 1 975 404 B1**
(45) Date de publication et mention de la délivrance du brevet: **01.12.2010**
(21) Numéro de dépôt: 08447019.4
(22) Date de dépôt: 27.03.2008
(51) Int. Cl.: F03B 13/08, E02C 1/00, F03B 7/00, F03B 15/08, F03B 15/16, F03B 3/10

(54) **Système de récupération d'énergie hydraulique**
System zur Rückgewinnung von hydraulischer Energie
System for recovering hydraulic energy

(30) Priorité: 27.03.2007 BE 200700152
(43) Date de publication de la demande: 01.10.2008
(73) Titulaire: de Jonghe d'Ardoye, Baldwin, 5500 Dréhance (BE)
(72) Inventeur: de Jonghe d'Ardoye, Baldwin, 5500 Dréhance (BE)
(74) Mandataire: Luys, Marie-José A.H.

(56) Documents cités:
- EP-A- 0 048 004
- ES-A1- 2 226 522
- GB-A- 171 773
- US-A- 410 132
- US-A- 4 109 160
- US-A- 5 430 332

## Description

La présente invention se rapporte à un système de récupération d'énergie hydraulique d'au moins une partie d'un débit d'eau traversant un barrage de régulation du niveau d'eau d'un bief amont d'une écluse.

L'utilisation de l'énergie hydraulique liée à des différences entre des niveaux d'eau, bien causées par des sauts d'eau naturels, bien par des barrages ou retenues artificiels, est connue de longue date. Cette énergie a d'abord été exploitée dans des moulins à eau comportant des roues à aubes et plus tard dans des barrages hydroélectriques comportant des turbines. De tels barrages hydroélectriques, permettant la génération d'énergie électrique en exploitant une énergie éminemment renouvelable, fournissent aujourd'hui une proportion considérable de l'énergie électrique consommée dans le monde. Toutefois, ils comportent aussi des inconvénients considérables. Afin de générer de l'énergie efficacement, ces barrages hydroélectriques sont dépendants d'un côté de l'existence de cours d'eau avec des dénivelés considérables, et d'un autre côté d'ouvrages substantiels, et donc chers et ayant un grand impact environnemental, avec des grandes surfaces inondées, blocage des migrations des poissons, génération de méthane par décomposition de matière organique dans les lacs de barrage, etc. Même à petite échelle, les centrales hydroélectriques sont donc généralement limitées à des régions relativement accidentées et ont des coûts non négligeables tant économiquement qu'écologiquement.

Dans des régions moins accidentées, par contre, les fleuves et rivières sont plutôt utilisés en tant que voies de transport. Le transport fluvial, en effet, bien que plus lent que le transport routier ou ferroviaire, permet le transport de grandes masses et volumes de matière à un coût comparativement bas et avec une bien moindre consommation d'énergie. Toutefois, même dans des régions peu accidentées, la navigabilité des fleuves et rivières doit souvent être assurée avec des écluses. Ces écluses sont implantées au droit d'un barrage qui crée un plan d'eau ou bief en amont. Ces barrages comportent généralement des moyens mobiles de contention, tels que des vantelles, afin de réguler le niveau de l'eau.

Des écluses sont aussi utilisées afin de permettre à des navires franchir des barrages hydroélectriques, comme divulgué par exemple dans la demande de brevet britannique GB 2 186 917 A. Toutefois, dans des tels systèmes, l'écluse est installée en même temps que ou après le barrage hydroélectrique. Ils ne permettent donc pas l'utilisation hydroélectrique de barrages existants servant à réguler le niveau d'eau des biefs amont d'écluses.

Un des systèmes de récupération d'énergie hydraulique selon l'art antérieur est connu par le document ES 2 226 522. Dans la demande de brevet américain US 2004/0108731, un procédé a été proposé pour l'utilisation de l'énergie hydraulique d'une rivière ou fleuve navigable avec au moins un système de franchissement de dénivellation comportant au moins une écluse. Ce procédé de l'état de technique permet d'exploiter le déplacement de l'eau pendant le remplissage et la vidange d'écluses en installant des turbines dans les conduites de remplissage et vidange des écluses. Toutefois, un tel procédé est difficilement applicable sur des écluses déjà existantes sans effectuer des travaux chers et nécessitant la mise hors service temporaire des écluses. En outre, il n'exploite que le débit d'eau entre les biefs amont et aval à travers l'écluse, négligeant le débit beaucoup plus régulier et considérable à travers le barrage parallèle à l'écluse dans un fleuve ou rivière. D'autres divulgations, telle que celle contenue dans la demande de brevet britannique GB 2412409 A, ou celle de la demande de brevet international WO 03/054385 A1, proposent l'installation de turbines dans des sas tels que ceux d'une écluse. Bien que plus faciles à mettre en ordre, ces installations partagent l'inconvénient de ne servir qu'à exploiter le débit d'eau limité et intermittent à travers l'écluse. Dans le brevet américain US 4,345,159, un système fut divulgué comportant des turbines dans le barrage de régulation de niveau du bief amont d'une écluse afin d'exploiter le débit d'eau traversant ce barrage. Toutefois, le diamètre des turbines va être limité par la faible profondeur en aval du barrage.

Cet inconvénient fut adressé, dans le brevet britannique GB 171 773, par un système de récupération d'énergie hydraulique d'au moins une partie d'un débit d'eau traversant un barrage de régulation du niveau d'eau d'un bief amont d'une écluse, comportant au moins une roue à aubes et au moins un générateur électrique. Bien que des roues à aubes présentent-des avantages considérables pour exploiter un tel débit d'eau de faible profondeur, la transmission mécanique entre les roues à aubes et les générateurs électriques comporte plusieurs inconvénients, dont un premier est celui des grandes dimensions des engrenages, courroies ou chaînes nécessaires pour transmettre la puissance générée par les roues à aubes. En particulier quand ce système de récupération de l'énergie hydraulique va être installé sur un barrage déjà existant, les dimensions des transmissions vont limiter la largeur des roues à aubes et donc limiter l'énergie hydraulique pouvant être récupérée. Un autre inconvénient important est le rapport de transmission fixe d'une telle transmission mécanique. Étant donné que la vitesse de rotation de la roue à aubes peut largement varier selon le débit du cours d'eau, un tel rapport de transmission fixe aura comme conséquence les mêmes variations dans la vitesse des générateurs électriques, ce qui, par exemple, complique la connexion au réseau.

Le problème adressé par l'invention est donc celui de plus efficacement utiliser l'énergie hydraulique d'une rivière ou fleuve navigable traversant un barrage d'écluse, et ceci sans devoir effectuer des ouvrages majeurs, tels que des nouveaux barrages ou des déviations du cours d'eau. Ce problème est résolu par une transmission hydraulique comportant au moins une pompe hydraulique couplée à ladite roue à aubes, au moins un moteur hydraulique couplé audit générateur électrique, un circuit hydraulique reliant lesdits pompe et moteur hydrauliques, et des moyens de régulation de vitesse, de préférence électroniques, dudit moteur hydraulique permettant de maintenir une vitesse constante dudit moteur hydraulique avec des vitesses variables de la roue à aubes. Grâce au moindre encombrement de cette transmission hydraulique, il devient ainsi possible d'utiliser une bien plus grande partie de l'énergie cinétique et/ou potentielle du débit d'eau normalement déversé par le barrage de régulation en parallèle à l'écluse sans effectuer des ouvrages d'envergure nécessitant, par exemple, la mise à sec du lit du fleuve. La pose du système de récupération d'énergie peur s'effectuer par exemple par péniche et grues sans nécessiter de fermeture ou déviation du cours du fleuve.

En outre, une vitesse de sortie constante, indépendante de la vitesse de rotation de la roue à aubes, peut présenter des avantages pour la génération électrique.

Une vitesse constante du moteur hydraulique est particulièrement avantageuse lorsque le générateur doit être relié à un réseau à courant alternatif. Il est possible de directement générer du courant alternatif avec un alternateur. Toutefois, la fréquence d'un courant alternatif produit par un tel alternateur va normalement être proportionnelle à la vitesse de rotation du moteur hydraulique. Si cette vitesse est variable, des circuits électriques complexes seront nécessaires pour convertir ce courant à fréquence variable dans un courant avec la fréquence du réseau. Avantageusement, ledit générateur peut donc être un alternateur, de préférence synchrone, et ladite vitesse constante correspondre à la fréquence d'un réseau électrique de courant alternatif sur lequel ledit alternateur pourrait être branché.

La puissance de la roue à aubes peut facilement être supérieure à celle des pompes hydrauliques disponibles sur le marché. Afin de pouvoir donc transmettre cette puissance sans recours à des pompes spéciales, ladite transmission hydraulique peut donc comporter une pluralité de pompes hydrauliques installées en parallèle sur ledit circuit hydraulique et couplées à ladite roue à aubes. Un avantage additionnel de cet arrangement est une plus grande fiabilité du système, puisque la défaillance d'une seule pompe hydraulique ne signifiera pas la défaillance de toute la transmission hydraulique. De préférence, la roue à aubes peut être couplée à chaque pompe hydraulique à travers un engrenage entre une couronne dentée fixée sur ladite roue à aubes et un pignon fixé sur l'axe d'actionnement de chacune de ladite pluralité de pompes hydrauliques. Cette solution permet l'arrangement d'un grand nombre de pompes hydrauliques sur une seule couronne dentée. La couronne pourrait être dentée à l'intérieur et/ou à l'extérieur. Il serait aussi possible d'installer une couronne dentée de chaque côté de la roue à aubes.

Avantageusement, un axe de ladite roue à aubes est monté sur au moins un bras pivotant. Ceci permet donc d'adapter la hauteur de la roue à aubes au niveau de l'eau afin d'obtenir un meilleur rendement, ainsi qu'à pouvoir sortir la roue d'aubes de l'eau pour des opérations de maintenance ainsi que pour laisser passer des objets entraînés par le débit d'eau pouvant autrement bloquer la roue à aubes. Pour cela, il peut être particulièrement avantageux si ledit bras pivotant comporte un vérin, de préférence un vérin hydraulique, pour lever et/ou descendre ladite roue à aubes.

La présente invention se rapporte aussi à un système de franchissement de dénivellation d'une rivière ou fleuve navigable avec au moins une écluse, un barrage de régulation du niveau d'eau d'un bief amont de l'écluse, et un système de récupération d'énergie suivant l'invention, dans lequel ledit barrage comporte, pour la régulation du débit d'eau, un ensemble de moyens mobiles de contention, tels que des vantelles. Outre la régulation du niveau d'eau du bief amont, de tels moyens mobiles de contention peuvent aussi contribuer à la régulation de la récupération d'énergie.

Avantageusement, un desdits moyens mobiles de contention est monté entre deux pilons de support et ledit système de récupération d'énergie est installé de manière à être supporté par au moins un desdits pilons de support. De cette manière, ces pilons déjà existants sont utilisés pour soutenir le système de récupération d'énergie, et on peut éviter la construction de nouvelles fondations pour soutenir les installations du système de récupération d'énergie.

Alternativement ou complémentairement, au moins un desdits moyens mobiles de contention est formé par une cape de protection montée basculante sur ladite roue à aubes. Ceci permet de plus facilement réguler de manière conjointe le niveau d'eau du bief amont et la récupération d'énergie, tout en protégeant au moins partiellement la roue à aubes.

L'invention se rapporte aussi à un procédé de régulation d'un tel système, où le système de récupération d'énergie et la position de l'ensemble de moyens mobiles de contention sont régulés conjointement en fonction au moins du niveau d'eau du bief amont. Ceci permet de maximiser le rendement du système de récupération d'énergie tout en le faisant contribuer à la régulation du niveau d'eau du bief amont.

Des détails concernant l'invention sont décrits de manière illustrative mais non restrictive ci-après faisant référence aux dessins.
La figure 1 illustre une vue de plan d'un système de franchissement de dénivellation d'une rivière navigable selon un mode de réalisation de l'invention.
La figure 2 illustre une vue de face du même système de franchissement.
La figure 3 illustre une vue en coupe dans le sens d'écoulement de l'eau du même système de franchissement,
la figure 4 illustre une vue en coupe dans le sens d'écoulement de l'eau d'un mode de réalisation alternatif,
la figure 5 illustre une vue en coupe dans le sens d'écoulement de l'eau d'un autre mode de réalisation alternatif, et
les figures 6 et 7 illustrent l'arrangement des pompes hydrauliques de la transmission hydraulique sur une couronne dentée fixée sur une roue à aubes, et
les figures 8 et 9 illustrent, respectivement, une vue en coupe et une vue supérieure d'un engrenage à gougeons, tel que peut être employé dans un mode de réalisation de l'invention.

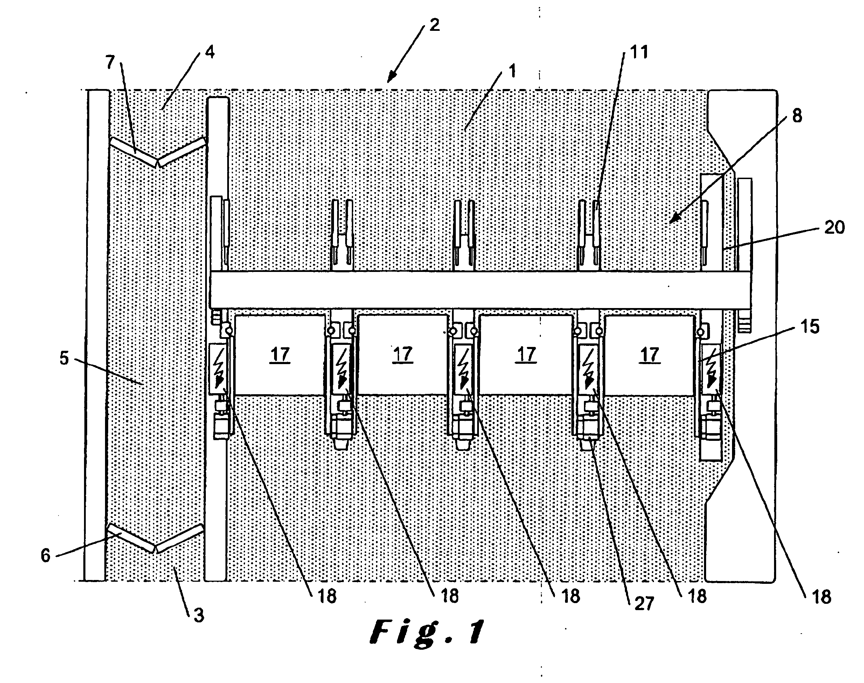

Dans la figure 1 un fleuve navigable 1 est illustré avec un système de franchissement 2 de la dénivellation entre un bief amont 3 et un bief aval 4. Le système de franchissement 2 comporte une écluse 5 avec un sas amont 6 et un sas aval 7, ainsi qu'un barrage 8 pour la régulation du niveau d'eau du bief amont 3.

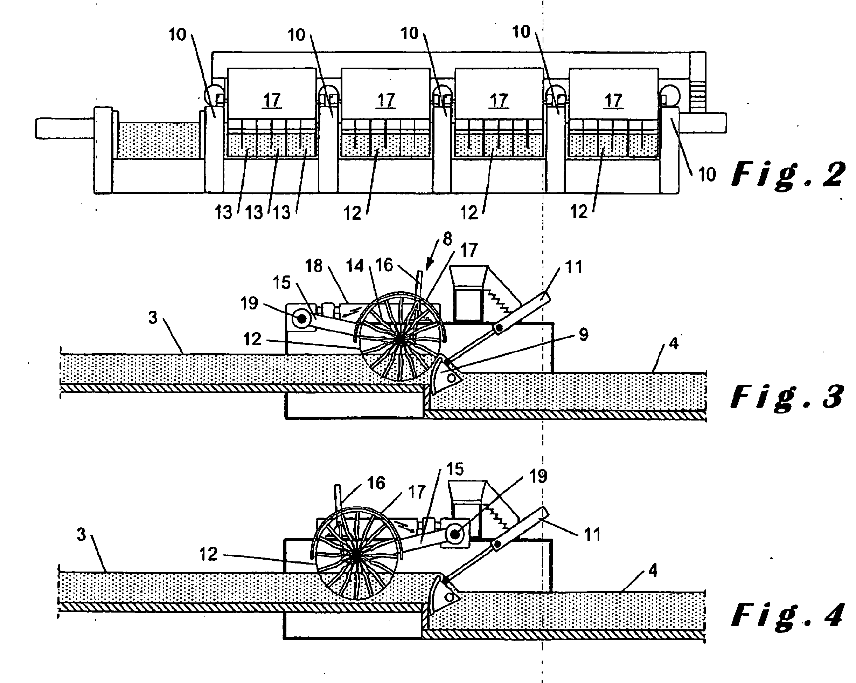

Tournant désormais vers la figure 3, ledit barrage 8 est formé par des moyens mobiles de contention, dans ce cas particulier des vantelles 9, installés entre des pilons de support 10. Les vantelles 9 sont fixées de manière pivotante à ces pilons de support 10, de façon à pouvoir être actionnées par des vérins 11 aussi supportés par les pilons de support 10.

La position des vantelles 9 peut ainsi être régulée de manière à maintenir un niveau d'eau stable dans le bief amont 3, et de cette manière assurer sa navigabilité. Une embarcation arrivant par le fleuve navigable 1 au système de franchissement 2 pourra ainsi franchir la dénivellation entre le bief amont 3 et le bief aval 4 dans l'un ou l'autre sens en passant par l'écluse 5.

Afin d'utiliser l'énergie hydraulique du fleuve, un système de récupération d'énergie a été installé dans le barrage 8 suivant un mode de réalisation du procédé de l'invention.

Entre chaque paire de pilons 10, une roue à aubes 12 a été installée occupant l'espace entre les pilons 10 dans sensiblement toute sa largeur. Pour cela, il est particulièrement avantageux de construire les roues d'aubes 12 à partir de modules 13 d'une largeur déterminée, comme par exemple 1 mètre. Ainsi, à partir de modules d'une seule largeur, possiblement construits en série, on pourra construire des roues à aubes 12 adaptées à des différentes largeurs entre pilons 10. Chaque roue à aubes 12 comporte un axe 14 monté rotatif entre deux bras pivotants 15, qui peuvent être actionnés par des vérins 16. Grâce à ces bras pivotants 15, la position de la roue à aubes 12 peut être ajustée en hauteur de manière à l'adapter au niveau d'eau ou bien pour laisser passer tout objet charrié par le fleuve pouvant perturber la rotation de la roue d'aubes 12. Les vérins 16 peuvent par exemple être commandés pour relever automatiquement la roue à aubes 12 en cas de diminution brutale de la rotation et la redescendre dès que l'objet encombrant aura été dégagé. La roue à aubes 12 peut aussi être relevée pour des travaux de maintenance, comme par exemple la réparation ou replacement d'aubes endommagées ou en période de fortes crues.

Dans les modes de réalisation illustrés, les roues à aubes 12 comportent aussi des capes de protection 17 servant à éviter les projections d'eau et la chute d'objets, animaux ou personnes dans celles-ci. Des transmissions hydrauliques permettent de transmettre la rotation des roues à aubes 12 vers des générateurs électriques 18.

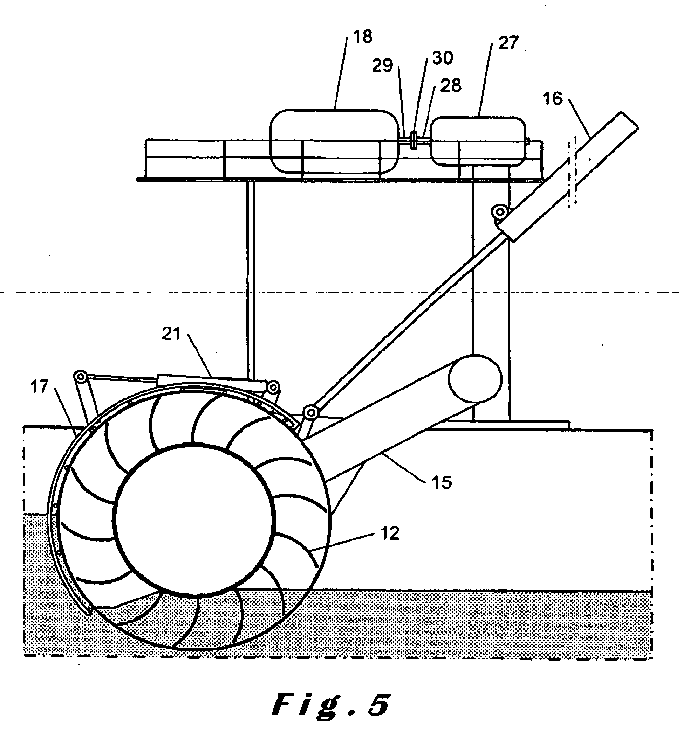

Dans le mode de réalisation illustré dans les figures 1, 2 et 3, les pivots 19 des bras pivotants 15 sont situés en amont des roues à aubes 12, permettant de placer celles-ci très à proximité des vantelles 9 et donc de profiter de la plus grande vitesse d'écoulement de l'eau à cette position. Toutefois, il est possible que les pilons 10 soient trop courts pour cette configuration. Dans ce cas, une configuration inversée, telle qu'illustrée dans les figures 4 et 5, peut être adoptée où les roues à aubes 12 sont placées en amont des pivots 19 des bras pivotants 15.

Dans le mode de réalisation illustré dans la figure 5, la cape de protection 17 est montée basculante sur l'axe 14 de la roue à aubes 12, et actionné par des vérins 21, de manière à pouvoir servir simultanément comme moyen mobile de contention de l'eau servant à réguler le débit d'eau, et donc le niveau d'eau du bief amont 3. Si un tel système de récupération d'énergie hydraulique est installé sur un barrage 8 existant, avec des vantelles 9, ces vantelles 9 peuvent bien être désactivées, de manière à réguler le débit d'eau uniquement avec les capes de protection 17 basculantes, ou bien être contrôlées conjointement avec les capes de protection 17 basculantes.

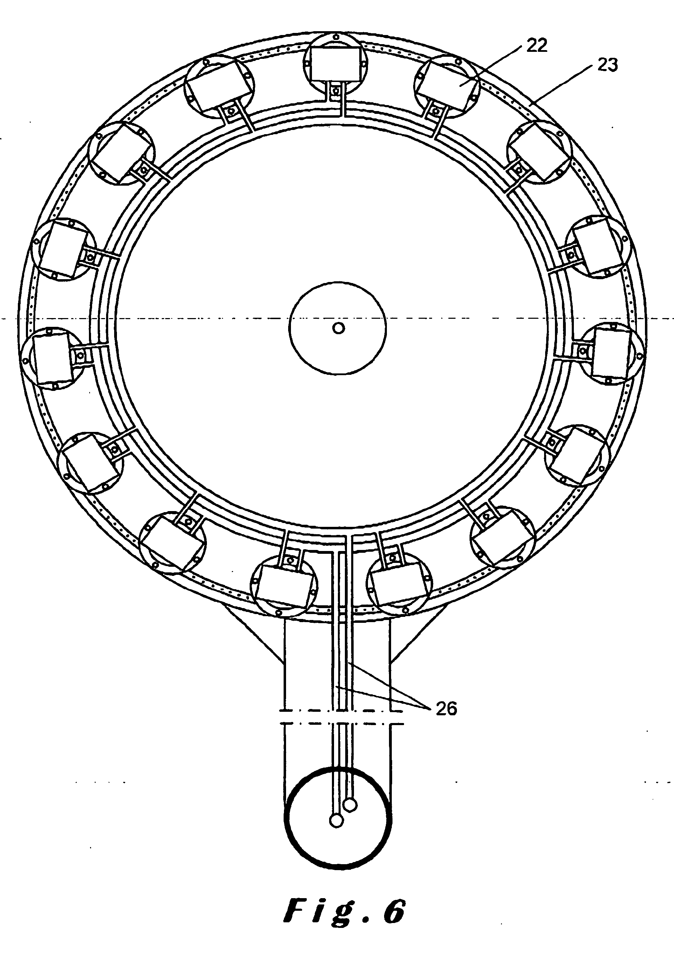

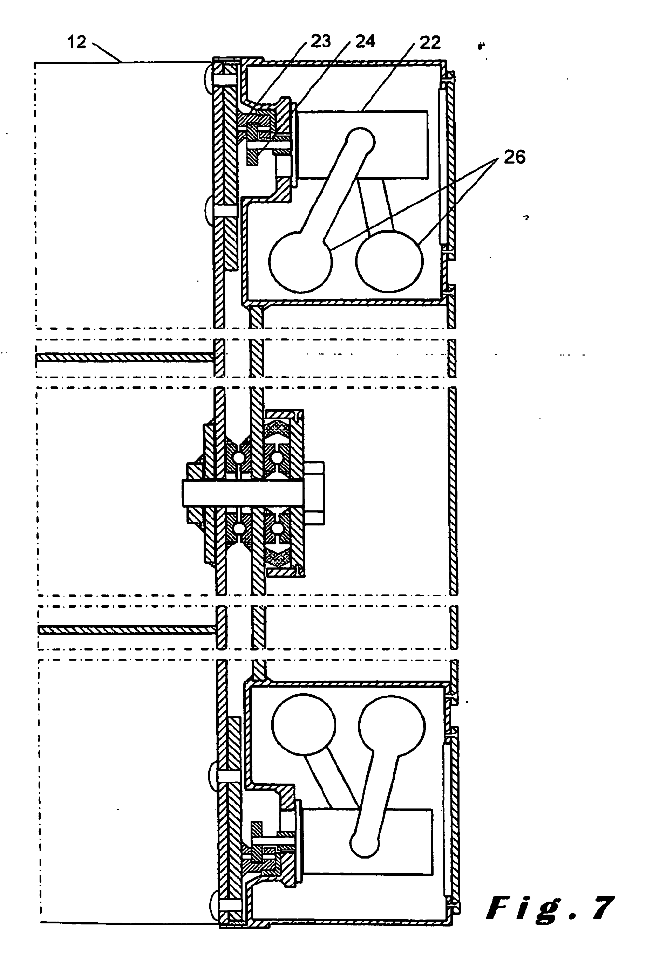

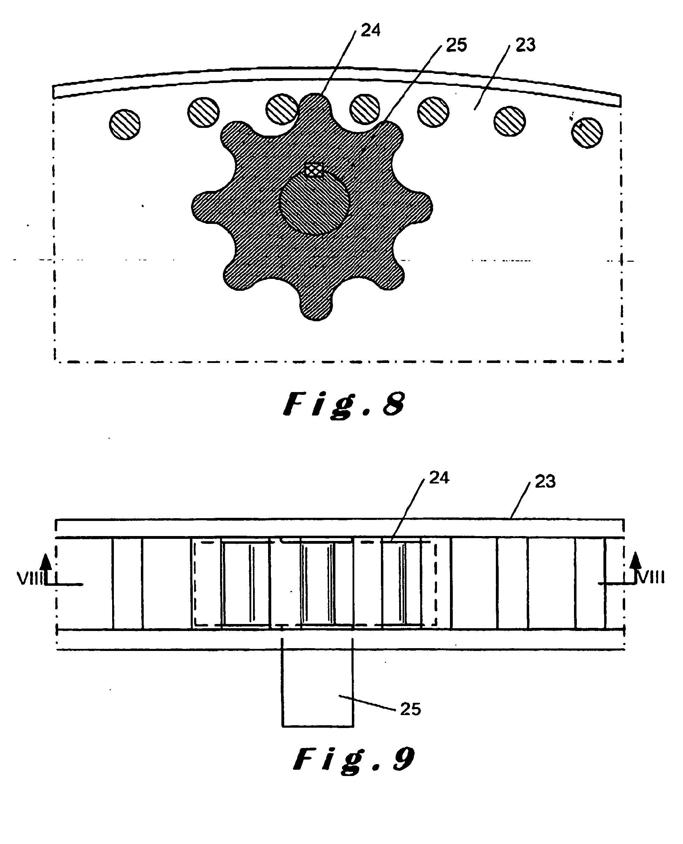

Un exemple de réalisation de la transmission hydraulique du système suivant l'invention est illustré dans les figures 6 et 7. Afin de permettre de coupler à la roue à aubes 12 un nombre considérable de pompes hydrauliques 22 à entraînement rapide, celle-ci comporte, de chaque côté, une couronne dentée 23, qui engrène des pignons 24 fixés sur les axes d'entraînement 25 des pompes hydrauliques 22. Cette couronne dentée 23 peut être dentée vers l'intérieur et/ou vers l'extérieur. Alternativement, les dents de la couronne dentée 23 peuvent être formées par des gougeons 26 pouvant être engrenés tant du côté intérieur comme du côté extérieur de la couronne dentée 23, comme illustré dans les figures 8 et 9.

Des pompes hydrauliques 22 à entrainement rapide comme celles illustrées dans les figures 6 et 7 ont leur meilleur rendement à environ 1500 tours par minute. Le rapport de multiplication entre la roue à aubes 12 et les axes d'entraînement 25 des pompes hydrauliques 22 est donc de préférence choisi, en fonction du diamètre de la roue à aubes 12 et de la profondeur et débit moyens du cours d'eau afin d'obtenir cette vitesse.

Avec, par exemple, une couronne dentée 23 avec 714 dents, et des pignons 24 de 8 dents chacun, un rapport de multiplication de 89,25 est obtenu, ce qui, multiplié par une vitesse de rotation typique de la roue à aubes 12 de 18 tours par minute, résulte dans une vitesse de rotation des axes d'entraînement 25 des pompes hydrauliques 22 de 1606 tours par minute.

Les pompes hydrauliques 22 peuvent être dans un nombre de plus de 15 de chaque côté de la roue à aubes 12. Par exemple, dans le mode de réalisation illustré dans la figure 6, 20 pompes hydrauliques 22 sont entraînées par une couronne dentée 23 de chaque côté de la roue à aubes 12. Ces pompes hydrauliques 22 sont connectées en parallèle sur un circuit hydraulique 26, de manière à actionner un moteur hydraulique 27 branché sur le même circuit hydraulique 26. La transmission hydraulique comporte de moyens de régulation de la vitesse dudit moteur hydraulique 27, permettant de maintenir une vitesse constante du moteur hydraulique 27 à des vitesses variables des pompes 22. Par exemple, le moteur hydraulique 27 peut comporter des pales à angle variable et un contrôleur, par exemple électronique, permettant de varier l'angle de ces pales afin de maintenir une vitesse constante de l'axe de sortie 28 du moteur 27. Cet axe de sortie 28 peut être couplé ou découplé à un axe d'entrainement 29 du générateur électrique 18 à travers un embrayage 30.

Le générateur électrique 18 peut être un alternateur, de préférence un simple alternateur synchrone. Comme la vitesse du moteur hydraulique 27 peut être maintenue constante, la fréquence du courant alternatif généré par un tel alternateur peut aussi être maintenue constante. Si cette fréquence constante est celle du réseau électrique alimenté par le générateur 18, par exemple une fréquence de 50 Hz, il sera possible de brancher le générateur électrique 18 directement sur ce réseau, sans avoir recours aux circuits complexes qui seraient autrement nécessaires pour adapter la fréquence du courant généré à celle du réseau.

Les positions des bras pivotants 15, des vantelles 9 et/ou des capes de protection 17 peuvent aussi être contrôlées pour une première régulation de la vitesse de rotation des roues à aubes 12.

Le système de franchissement 2 peut comporter en outre un escalier pour poissons 20, comme illustré dans la figure 1.

Comme le système de récupération d'énergie est soutenu par les pilons 10, il peut être facilement être installé sur un barrage existant par péniche et grues et sans nécessité d'autres fondations. Le système de récupération d'énergie peut contribuer aussi à réguler le débit d'eau et donc le niveau d'eau du bief amont 3, et il est donc avantageux de le réguler conjointement avec la position des vantelles 9. Parmi les paramètres de fonctionnement du système de récupération d'énergie pouvant être régulés sont par exemple la vitesse de rotation des roues à aubes 12, leur couple de rotation, la puissance transmise ou la position des bras pivotants 15.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que restrictif.

### REFERENCES DES FIGURES

- 1: Rivière ou fleuve navigable
- 2: Système de franchissement de dénivellation
- 3: Bief amont
- 4: Bief aval
- 5: Écluse
- 6: Sas amont
- 7: Sas aval
- 8: Barrage de régulation du niveau d'eau du bief amont
- 9: Vantelles
- 10: Pilons de support
- 11: Vérins
- 12: Roues à aubes
- 13: Modules
- 14: Axe
- 15: Bras pivotants
- 16: Vérins
- 17: Cape de protection
- 18: Générateurs électriques
- 19: Pivots
- 20: Escalier pour poissons
- 21: Vérins
- 22: Pompes hydrauliques
- 23: Couronne dentée
- 24: Pignons
- 25: Axe d'entraînement
- 26: Circuit hydraulique
- 27: Moteur hydraulique
- 28: Axe de sortie
- 29: Axe d'entraînement
- 30: Embrayage

## Revendications

1. Système de récupération d'énergie hydraulique d'au moins une partie d'un débit d'eau traversant un barrage (8) de régulation du niveau d'eau d'un bief amont (3) d'une écluse (5), ledit système de récupération d'énergie comportant au moins une roue à aubes (12) et au moins un générateur électrique (18), et **caractérisé en ce qu'**il comporte en outre une transmission hydraulique comportant au moins une pompe hydraulique (22) couplée à ladite roue à aubes (12), au moins un moteur hydraulique (27) couplé audit générateur électrique (18), un circuit hydraulique (26) reliant lesdits pompe et moteur hydrauliques (22,27), et des moyens de régulation de vitesse, de préférence électroniques, dudit moteur hydraulique (27) permettant de maintenir une vitesses constante dudit moteur hydraulique (27) à des vitesses variables de la roue d'aubes (12).

2. Système suivant la revendication 1, **caractérisé en ce que** ledit générateur électrique (18) est un alternateur, de préférence synchrone, et ladite vitesse constante correspond à la fréquence d'un réseau électrique de courant alternatif sur lequel ledit alternateur peut être branché.

3. Système suivant une quelconque des revendications précédentes, **caractérisé en ce que** ladite transmission hydraulique comporte une pluralité de pompes hydrauliques (22) installées en parallèle sur ledit circuit hydraulique (26) et couplées à ladite roue d'aubes (12), de préférence à travers un engrenage entre une couronne dentée (23) fixée sur ladite roue à aubes (12) et un pignon (24) fixé sur l'axe d'entrainement (25) de chacune de ladite pluralité de pompes hydrauliques (22).

4. Système suivant une quelconque des revendications précédentes, **caractérisé en ce qu'**un axe (14) de ladite roue à aubes (12) est monté sur au moins un bras pivotant (15), et préférablement entre deux bras pivotants (15).

5. Système suivant la revendication 4, **caractérisé en ce que** ledit bras pivotant (15) comporte un vérin (16), de préférence un vérin hydraulique, pour lever et/ou descendre ladite roue à aubes (12), en particulier en période de crue.

6. Système de franchissement (2) de dénivellation d'une rivière ou fleuve navigable (1) avec au moins une écluse (5), un barrage de régulation (8) du niveau d'eau d'un bief amont (3) de l'écluse (5), et un système de récupération d'énergie suivant une quelconque des revendications précédentes, **caractérisé en ce que** ledit barrage (8) comporte, pour la régulation du débit d'eau, un ensemble de moyens mobiles de contention, tels que, par exemple des vantelles (9).

7. Système suivant la revendication 6, **caractérisé en ce qu'**au moins un desdits moyens mobiles de contention est monté entre deux pilons (10) de support et ledit système de récupération d'énergie est supporté par au moins un desdits pilons (10).

8. Système suivant une des revendications 6 ou 7, **caractérisé en ce qu'**au moins un desdits moyens mobiles de contention est formé par une cape de protection (17) montée basculante sur ladite roue à aubes.

9. Procédé de régulation d'un système suivant une quelconque des revendications 6 à 8, **caractérisé en ce que** le système de récupération d'énergie et la position de l'ensemble de moyens mobiles de contention sont régulés conjointement en fonction au moins du niveau d'eau du bief amont (3).

10. Procédé de régulation d'un système suivant une quelconque des revendications 1 à 8, **caractérisé en ce que** lesdits moyens de régulation de vitesse maintiennent une vitesse constante dudit moteur hydraulique (27), telle que ledit générateur électrique (18) produise un courant alternatif avec la même fréquence qu'un réseau électrique sur lequel ledit générateur électrique (18) est branché.

## Claims

1. System for recovering hydraulic energy from at least part of a flow of water passing through a barrage (8) for regulating the water level in a reach (3) upstream of a lock (5), the said energy recovery system comprising at least one bladed wheel (12) and at least one electrical generator (18), and **characterised in that** it also comprises a hydraulic transmission comprising at least one hydraulic pump (22) coupled to the said bladed wheel (12), at least one hydraulic motor (27) coupled to the said electrical generator (18), a hydraulic circuit (26) connecting the said hydraulic pump and motor (22, 27), and means, preferably electronic, for regulating the speed of the said hydraulic motor (27) for maintaining a constant speed of the said hydraulic motor (27) at variable speeds of the bladed wheel (12).

2. System according to claim 1, **characterised in that** the said electrical generator (18) is an alternator, preferably synchronous, and the said constant speed corresponds to the frequency of an AC electrical system to which the said alternator can be connected.

3. System according to any one of the preceding claims, **characterised in that** the said hydraulic system comprises a plurality of hydraulic pumps (22) installed in parallel to the said hydraulic circuit (26) and coupled to the said bladed wheel (12), preferably through a meshing between an annular gear (23) fixed to the said bladed wheel (22) and a pinion (24) fixed to the drive shaft (25) of each of the said plurality of hydraulic pumps (22).

4. System according to any one of the preceding claims, **characterised in that** a shaft (14) of the said bladed wheel (12) is mounted on at least one pivoting arm (15) and preferably between two pivoting arms (15).

5. System according to claim 4, **characterised in that** the said pivoting arm (15) comprises a jack (16), preferably a hydraulic jack, for raising and/or lowering the said bladed wheel (12), in particular when there are floods.

6. System (2) for passing across a difference in level in a navigable river (1) with at least one lock (5), a barrage (8) for regulating the water level in a reach (3) upstream of the lock (5), and an energy recovery system according to any one of the preceding claims, **characterised in that** the said barrage (8) comprises, for regulating the water flow, a set of movable retaining means, such as for example sluice valves (9).

7. System according to claim 6, **characterised in that** at least one of the said movable retaining means is mounted between two support pillars (10) and the said energy recovery system is supported by at least one of the said pillars (10).

8. System according to one of claims 6 or 7, **characterised in that** at least one of the said movable retaining means is formed by a protective cover (17) mounted tiltingly on the said bladed wheel.

9. Method of regulating a system according to any one of claims 6 to 8, **characterised in that** the energy recovery system and the position of the set of movable retaining means are regulated conjointly according to at least the water level in the upstream reach (3).

10. Method of regulating a system according to any one of claims 1 to 8, **characterised in that** the said speed regulation means maintain a constant speed of the said hydraulic motor (27), so that the said electrical generator (18) produces an alternating current with the same frequency as an electrical system to which the said electrical generator (18) is connected.

## Patentansprüche

1. System zur Rückgewinnung von hydraulischer Energie von mindestens einem Teil eines Wasserdurchflusses, der ein Wehr (8) zum Regeln des Wasserniveaus einer Kanalstrecke (3) stromaufwärts einer Schleuse (5) durchquert, wobei das System zur Rückgewinnung von Energie mindestens ein Schaufelrad (12) und mindestens einen Stromgenerator (18) aufweist, und **dadurch gekennzeichnet, dass** es ferner eine hydraulische Übertragung, die mindestens eine Hydropumpe (22), die mit dem Schaufelrad (12) gekuppelt ist, mindestens einen Hydromotor (27), der mit dem Stromgenerator (18) gekuppelt ist, einen hydraulischen Kreislauf (26), der die Hydropumpe und den Hydromotor (22, 27) verbindet, und Mittel zum Regeln der Drehzahl, die vorzugsweise elektronisch sind, des Hydromotors (27) aufweist, die es erlauben, eine konstante Drehzahl des Hydromotors (27) bei variablen Drehzahlen des Schaufelrads (12) aufrecht zu erhalten.

2. System nach Anspruch 1, **dadurch gekennzeichnet, dass** der Stromgenerator (18) ein Wechselstromgenerator ist, der vorzugsweise synchron ist, und dass die konstante Drehzahl der Frequenz eines Wechselstromnetzes entspricht, an das der Wechselstromgenerator angeschlossen werden kann.

3. System nach einem der vorhergehenden Ansprüche, **dadurch gekennzeichnet, dass** die hydraulische Übertragung mehrere hydraulische Pumpen (22) aufweist, die auf den hydraulischen Kreislauf (26) parallel geschaltet und mit dem Schaufelrad (12) vorzugsweise über ein Radgetriebe zwischen einem Zahnkranz (23), der auf dem Schaufelrad (12) befestigt ist, und einem Ritzel (24), das auf der Antriebsachse (25) jeder der mehreren hydraulischen Pumpen (22) befestigt ist, gekuppelt ist.

4. System nach einem der vorhergehenden Ansprüche, **dadurch gekennzeichnet, dass** eine Achse (14) des Schaufelrads (12) auf mindestens einen Schwenkarm (15) und vorzugsweise zwischen zwei Schwenkarmen (15) installiert ist.

5. System nach Anspruch 4, **dadurch gekennzeichnet, dass** der Schwenkarm (15) einen Zylinder (16) aufweist, vorzugsweise einen hydraulischen Zylinder, um das Schaufelrad (12) zu heben und/oder zu senken, insbesondere während einer Hochwasserphase.

6. System zum Überwinden (2) eines Niveauunterschieds eines schiffbaren Flusses oder Stroms (1) mit mindestens einer Schleuse (5), einem Wehr (8) zum Regeln des Wasserniveaus einer Kanalstrecke (3) stromaufwärts der Schleuse (5), und einem System zur Rückgewinnung von Energie nach einem der vorhergehenden Ansprüche, **dadurch gekennzeichnet, dass** das Wehr (8) zum Regeln des Wasserdurchflusses eine Einheit beweglicher Rückhaltemittel hat, wie zum Beispiel Schütze (9).

7. System nach Anspruch 6, **dadurch gekennzeichnet, dass** mindestens eines der beweglichen Rückhaltemittel zwischen zwei Tragstempeln (10) installiert ist, und dass das System zur Rückgewinnung von Energie von mindestens einem der Stempel (10) getragen wird.

8. System nach einem der Ansprüche 6 oder 7, **dadurch gekennzeichnet, dass** mindestens eines der beweglichen Rückhaltemittel aus einer Schutzkappe (17) gebildet ist, die auf dem Schaufelrad kippend installiert ist.

9. Verfahren zum Regeln eines Systems nach einem der Ansprüche 6 bis 8, **dadurch gekennzeichnet, dass** das System zur Rückgewinnung von Energie und die Position der Einheit beweglicher Rückhaltemittel gemeinsam in Abhängigkeit von mindestens dem Wasserniveau der stromaufwärtigen Kanalstrecke (3) geregelt werden.

10. Verfahren zum Regeln eines Systems nach einem der Ansprüche 1 bis 8, **dadurch gekennzeichnet, dass** die Mittel zum Regeln der Drehzahl eine konstante Drehzahl des Hydromotors (27) solange aufrechterhalten wie der Stromgenerator (18) einen Wechselstrom mit der gleichen Frequenz wie die eines Stromnetzes, an das der Stromgenerator (18) angeschlossen ist, erzeugt.
